# EUROPEAN PATENT APPLICATION

(11) **EP 1 669 942 A1**
(43) Date of publication of application: **14.06.2006**
(21) Application number: 05252682.9
(22) Date of filing: 28.04.2005
(51) Int. Cl.: G07C 9/00, G07F 7/10

(54) **Automated transaction control method, device and program**

(30) Priority: 10.12.2004 JP 2004357487
(71) Applicant: FUJITSU LIMITED, Kawasaki-shi, Kanagawa 211-8588 (JP); Fujitsu Frontech Limited, Inagi-shi, Tokyo 206-8555 (JP)
(72) Inventor: Chigira, Kenichi, c/o Fujitsu Terminal Syst Ltd., Maebashi-shi, Gunma 371-0855 (JP); Izawa, Shuuichi, c/o Fujitsu Terminal Syst Ltd., Maebashi-shi, Gunma 371-0855 (JP); Narita, Yuuichi, c/o Fujitsu Terminal Syst Ltd., Maebashi-shi, Gunma 371-0855 (JP); Kudou, Takahiro, c/o Fujitsu Terminal Syst Ltd., Maebashi-shi, Gunma 371-0855 (JP); Awatsu, Kiyotaka, c/o Fujitsu Frontech Limited, Inagi-shi, Tokyo 206-8555 (JP); Fujiwara, Masako, c/o Fujitsu Frontech Limited, Inagi-shi, Tokyo 206-8555 (JP); Okamura, Sagiri, c/o Fujitsu Frontech Limited, Inagi-shi, Tokyo 206-8555 (JP)
(74) Representative: Stebbing, Timothy Charles

(57) **Abstract**

An automated transaction device (6) is equipped with means (1) for biometric authentication of users. In order to prevent degradation of service to a user even when biometric authentication is not successful, a control unit of the automated transaction device, when biometric authentication is unsuccessful, switches to conventional transaction processing based on password authentication using an IC card (5). Transactions are thereby possible even when there are changes in the physical condition of the user, while maintaining the authentication accuracy of biometric authentication, contributing to improved service to the user.

## Description

This invention relates to an automated transaction control method, automated transaction device, and a program (e.g. stored on a storage medium) to verify input data obtained from a user against individual data on a storage device held by the user in order to perform automated transactions, and in particular to such a method, device and program which utilize a biometric authentication unit to read biometric information of the user, and verify the information against registered biometric information.

Automated transaction machines which are operated by users are in wide use. Such automated transaction machines include automated cash dispensers, automated deposit/withdrawal machines, and automated balance transfer machines for financial transactions, as well as automated ticket dispensers and automated certification document dispensers.

Such automated transaction machines are operated by users to perform deposit/withdrawal, cash transfer, document issuing, and other transactions. Hence from the standpoint of prevention of illicit operations, it is essential that such automated transaction machines perform identity verification (below, "individual authentication") of users. In the individual authentication methods of automated transaction machines used in the prior art, a card on which is recorded individual information is issued to each user, and when performing the automated transaction, a card password number (PIN) or other individual data is read and is compared with data input by the user.

Through advances in computer technology in recent years, such password-based individual authentication methods, which are specific to users, entail the use of simple strings of numbers which can be easily analyzed, and so from the standpoint of preventing illicit operations have become unsatisfactory. Hence various biometric-based authentication technologies utilizing biometric characteristics have been proposed for use in an automated transaction.

The human body has various biometrics (properties enabling identification of an individual), such as fingerprints, the retinas of the eyes, facial characteristics, and blood vessels. Advances in biometric technology in recent years have led to the proposal of various devices for identification of biometrics to perform an automated transaction (see Japanese Patent Laid-open No. 2003-256912) .

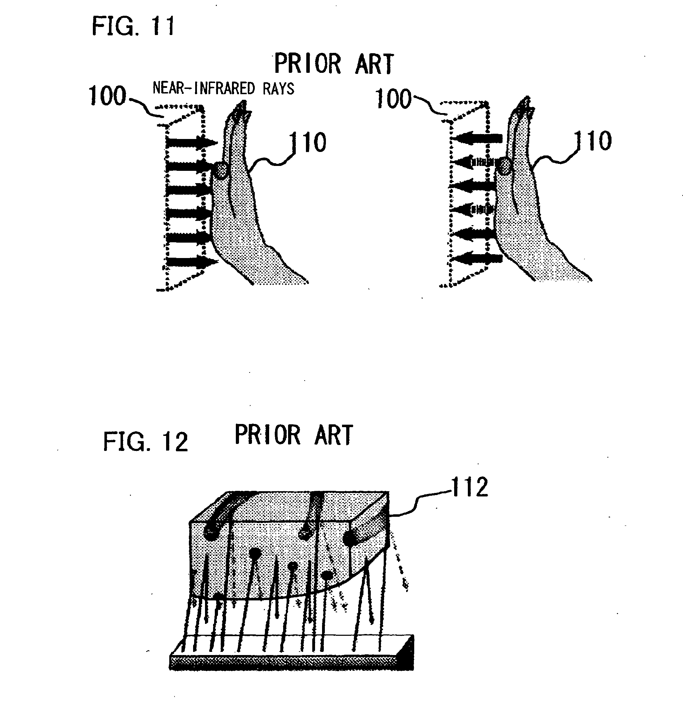

For example, blood vessel patterns in the palms and fingers or palm-prints constitute a comparatively large amount of individual characteristic data, and so are appropriate to ensure reliability of individual authentication. In particular, blood vessel (vein) patterns remain unchanged throughout life from infancy, and are regarded as being completely unique, and so are well-suited to individual authentication. Fig. 11 through Fig. 14 explain conventional palm authentication techniques. As shown in Fig. 11, at the time of registration or authentication, the user places the palm of the hand 110 into proximity with an image capture device 100. The image capture device 100 emits near-infrared rays, which are incident on the palm of the hand 110. The image capture device 100 uses a sensor to capture near-infrared rays reflected from the palm of the hand 110.

As shown in Fig. 12, hemoglobin in the red corpuscles flowing in the veins 112 has lost oxygen. This hemoglobin (reduced hemoglobin) absorbs near-infrared rays at wavelengths near 760 nanometers. Consequently when near-infrared rays are made incident on the palm of a hand, reflection is reduced only in the areas in which there are veins, and the intensity of the reflected near-infrared rays can be used to identify the positions of veins.

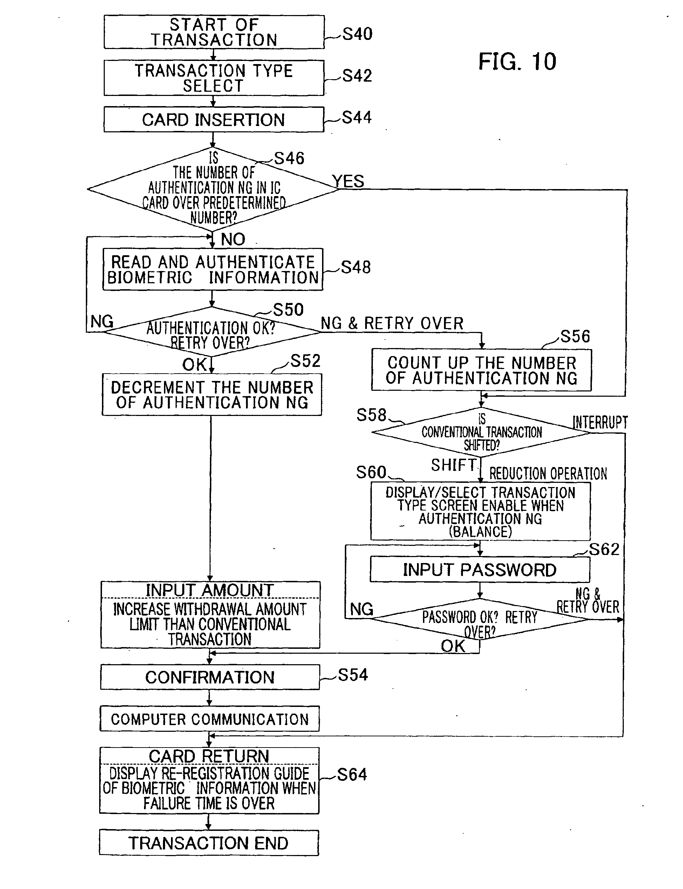

As shown in Fig. 11, the user first uses the image capture device 100 of Fig. 11 to register vein image data of the palm of his own hand in a server or on a card (storage medium). Then, in order to perform an automated transaction, the user employs the image capture device 100 of Fig. 10 to read the vein image data of his own hand.

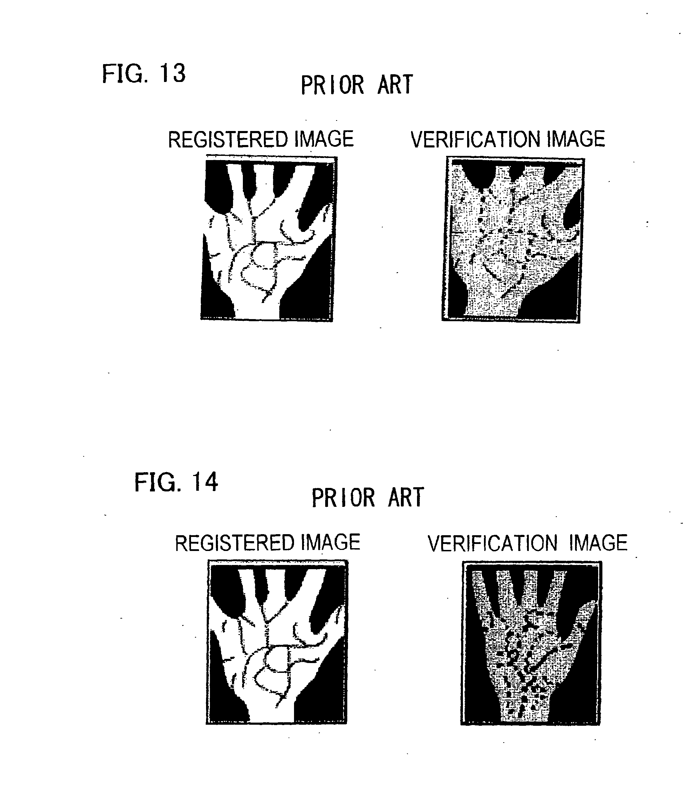

The automated transaction is performed by comparing the patterns of veins in the registered vein image retrieved using the user's ID recorded on a card and in the vein verification image thus read. For example, on comparing the vein patterns in the registered image and a verification image as in Fig. 13, the individual is confirmed to be the individual in question. On the other hand, upon comparison of the vein patterns in a registered image and in a verification image as in Fig. 14, the individual is not authenticated, i.e. his/her identity cannot be confirmed (see for example Japanese Patent Laid-open No. 2004-062826).

Since such a biometrics unit captures an image of a living body and extracts characteristic data of the living body, it is necessary to consider the physical condition of a user, such as influences of seasonal changes and activity, and momentary changes. That is, in order to authenticate accurately, it is necessary to set a stringent threshold value of a degree of similarity between characteristic data of the living body as registered and detected characteristic data of the living body presented for authentication. However, it can happen that the characteristic data of the living body varies from that registered according to the physical condition of the user when wishing to be authenticated. For example, in the above method of authentication by vein image, it may occur that the extracted image differs from that registered according to the user's pulse, etc.

In a prior art method, the transaction is halted when authentication is not successful even after multiple authentication attempts have been made. Thus, a worse service is provided to the user, since a genuine user cannot always perform a transaction depending on their physical condition.

Furthermore, there is a conflict between the need for high accuracy authentication (since high security is a sales point), and the need to avoid frequent denial of service to genuine users (since this makes users feel that it is not convenient to use biometric authentication). Consequently, there is resistance to a wide spread of automated transaction machines employing biometric authentication.

There is consequently a need to improve the service to users provided by an automated transaction device in which biometric authentication functions are installed.

There is also a need to improve the service for the user while maintaining an authentication accuracy of the biometric authentication functions.

Furthermore, there is a need to provide service to the user whilst taking account of the physical condition of the user, in an automated transaction device having biometric authentication functions.

An automated transaction device of this invention reads individual data from a storage device (storage medium) of a user, verifies the read data against input individual data, and performs automated transactions. The automated transaction device has a reading unit which reads the storage device of said user; a biometrics unit which verifies registered biometric characteristic data obtained directly or indirectly from the storage device against said biometric characteristic data detected from a body of the user, and performs individual authentication; and a control unit which performs automated transactions according to the authentication result of the biometrics unit. The control unit performs non-biometric authentication in which individual data on the storage device is verified against input individual data, and executes an automated transaction, when the biometric authentication result by the biometrics unit is not satisfactory.

An automated transaction control method of this invention has the steps of: verifying biometric characteristic data registered as individual data on a storage device against biometric characteristic data detected from the body using a biometrics unit, and performing biometric authentication; executing an automated transaction based on the biometric authentication when the result of said biometric authentication is satisfactory; and verifying individual data on the storage device against input individual data, performing non-biometric authentication for individual authentication, and executing an automated transaction when the result of the biometric authentication is not satisfactory.

A program of this invention, which may be stored on a computer readable storage medium, causes a computer to execute the steps of: verifying biometric characteristic data registered as individual data on a storage device or on a server against biometric characteristic data detected from the body of a user using a biometrics unit, and performing biometric authentication; executing an automated transaction based on the biometric authentication when the result of the biometric authentication is satisfactory; and verifying individual data on the storage device against input individual data, performing non-biometric authentication for individual authentication, and executing an automated transaction when the result of the biometric authentication is not satisfactory.

Preferably, the control unit causes conditions of a transaction based on the biometric authentication to be different from conditions of a transaction based on non-biometric authentication in which verification against the individual data is performed.

Preferably also, the control unit retries biometric authentication when the verification result of biometric authentication by the biometrics unit is not satisfactory, and switches to the non-biometric authentication when the number of retries exceeds a preset number of retries.

Further preferably, said storage device (e.g., IC card), records a preset number of retries as a permitted number of authentication NG (No Good) attempts; the control unit reads the preset number from the storage device, judges whether a current number of authentication NG attempts has exceeded the preset number, and switches to the non-biometric authentication when the number of authentication NG attempts has exceeded the preset number.

In this case, the control unit may urge re-registration of the user's biometric information by means of a guidance screen of the automated transaction device, when the number of authentication NG attempts exceeds the preset number.

The user's biometric data may be registered on the storage device (called "storage media" in the claims) itself, or on a server, in which case individual data on the storage device may be used to access the server.

As an example of different conditions on a transaction, the control unit may set a withdrawal amount limit for a transaction based on biometric authentication to be different from the withdrawal amount limit for a transaction based on non-biometric authentication in which only verification of individual data such as a PIN is performed.

The control unit may restrict the range of transactions allowed based on non-biometric authentication, in comparison with the range of transactions allowed based on biometric authentication.

The biometric unit preferably has an image capture device which captures an image of a body part of the user and an authentication unit which extracts the biometric characteristic data from the captured image, verifies the extracted biometric characteristic data against the registered biometric characteristic data of the user, and performs individual authentication.

In this case, preferably, the control unit has a middleware program which starts the biometric unit and, upon judging that the biometric authentication result is not satisfactory, executes non-biometric authentication, and a transaction processing program which controls an automated transaction mechanism to perform automated transaction operations according to the authentication result.

Reference will now be made, by way of example only, to the accompanying drawings in which:
Fig. 1 shows the configuration of an automated transaction system of one embodiment of the invention;
Fig. 2 is a perspective view of the ATM of Fig. 1;
Fig. 3 is a block diagram of the ATM of Fig. 1;
Fig. 4 is a functional block diagram of the biometric information verification processing of Fig. 3;
Fig. 5 is a side view showing the relation between the sensor of Fig. 4 and the palm of the hand;
Fig. 6 explains the blood vessel image of Fig. 4;
Fig. 7 explains the blood vessel image data of Fig. 4;
Fig. 8 shows the program configuration of the control unit in one embodiment of the invention;
Fig. 9 is a transaction processing flow diagram of the program configuration of Fig. 8;
Fig. 10 is another transaction processing flow diagram of the program configuration of Fig. 8;
Fig. 11 explains a conventional palm image capture device;
Fig. 12 explains the principle of a conventional palm image capture device;
Fig. 13 shows explanation diagram of conventional palm authentication technology; and,
Fig. 14 shows another explanation diagram of conventional palm authentication technology.

Below, embodiments of the invention are explained, in the order of an automated transaction system, biometric authentication processing, an automated transaction control method, and other embodiments.

### Automated Transaction System

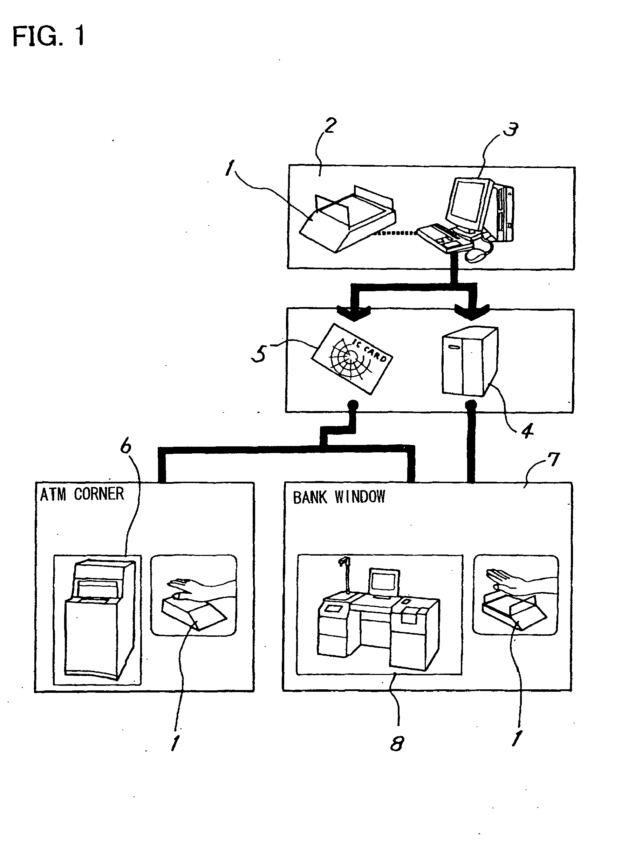

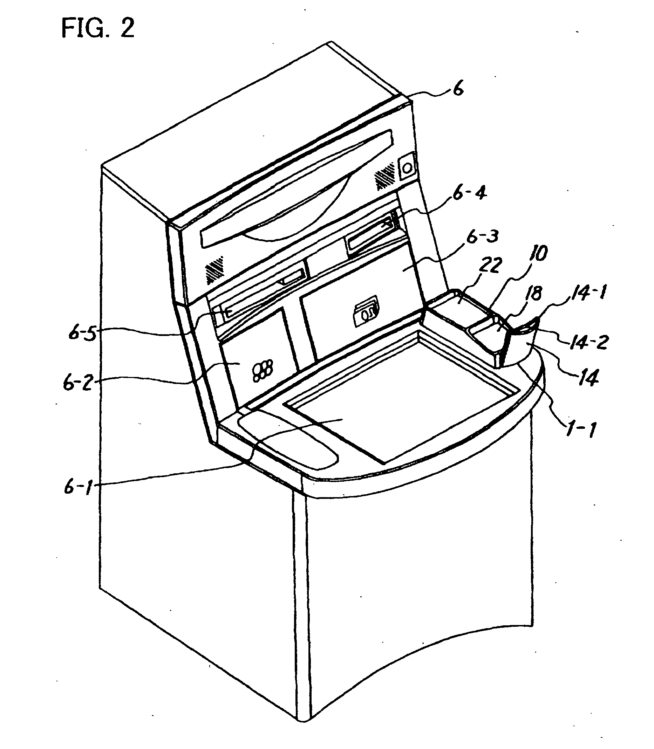

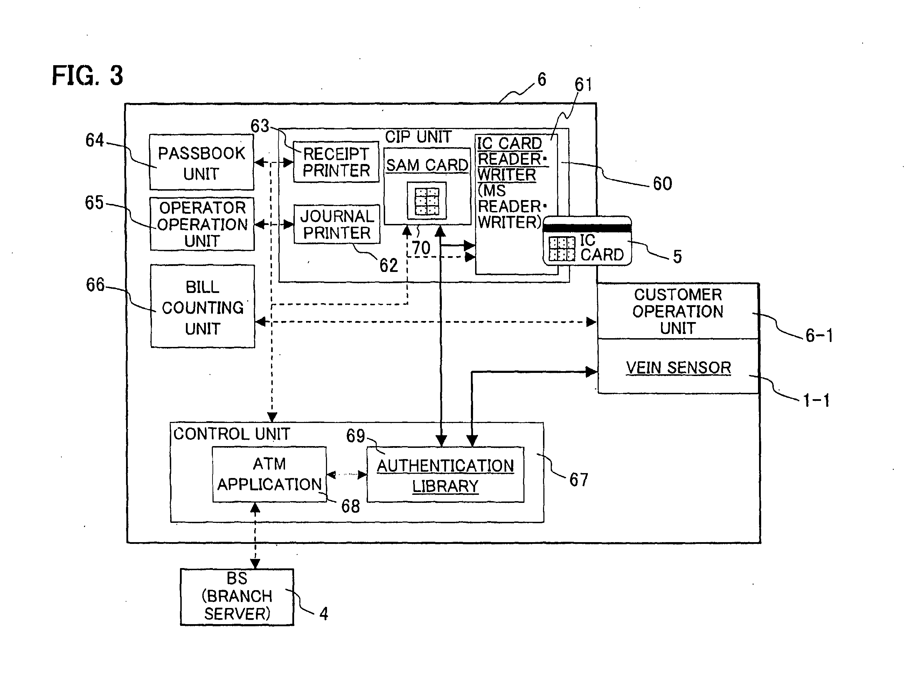

Fig. 1 shows the configuration of an automated transaction system of one embodiment of the invention, Fig. 2 is an external view of the automated transaction device of Fig. 1, and Fig. 3 shows the configuration of the automated transaction device of Fig. 2.

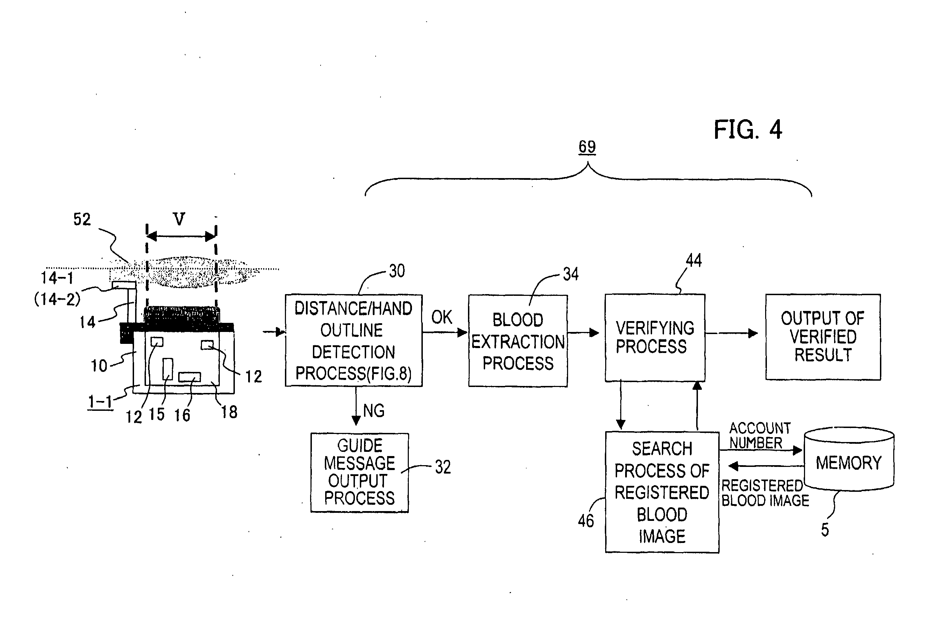

Fig. 1 shows an automated deposit/withdrawal system of a financial institution as the automated transaction system; as the biometrics authentication device, an example of a palm vein authentication device is shown. In the service area 2 of the financial institution are provided the palm image capture device 1 explained in Fig. 4 and a branch office terminal (for example, a personal computer) 3 connected thereto. A user requesting vein pattern authentication places his hand over the palm image capture device (hereafter the "image capture device") 1. The image capture device 1 reads the palm, and blood vessel image extraction processing is performed by the terminal 3 to extract the vein pattern, which is registered as vein data in the terminal 3.

This vein data is stored in a storage portion 4a of a database server 4 connected to the terminal 3, or in an individual card (for example, an IC card) 5 carried by the user. The server 4 is connected to a service area terminal 8 in the service area 7 of the financial institution, and the service area terminal 8 is connected to the image capture device 1.

The user places his hand over the image capture device 1 provided in the service area 7 in order to perform financial transaction. The image capture device 1 reads the palm, and the vein pattern is extracted by the blood vessel image extraction processing of the service area terminal 8. The service area terminal 8 verifies the vein pattern as vein data against the vein data registered in the database server 4 by means of the verification processing, and authenticates the individual.

The server 4 is connected to an ATM (automated cash deposit/withdrawal machine) 6 of the financial institution; the ATM 6 can be used in transactions based on vein authentication. In order to make a withdrawal or perform some other financial transaction using the ATM 6, the user holds his hand over the image capture device 1-1 provided in the ATM 6. The image capture device 1-1 reads the palm of the hand. Similarly to the service area terminal 8, the ATM 6 extracts the vein pattern (blood vessel image), and verifies this as vein data against the vein data registered in the IC card 5 carried by the user (or present in the database server 4), to authenticate the individual.

Fig. 2 and Fig. 3 show the configuration of the ATM (automated transaction machine) 6 of Fig. 1. As shown in Fig. 2, the ATM 6 has, on the front face thereof, a card insertion/ejection aperture 6-4; a bankbook insertion/ejection aperture 6-5; a paper currency insertion/dispensing aperture 6-3; a coin insertion/dispensing aperture 6-2; and a customer operation panel 6-1 for operation and display.

In this example, the image capture device 1-1 is provided on the side of the customer operation panel 6-1. The sensor unit 18 explained in Fig. 4 is mounted on the forward side of the main unit 10 of the image capture device 1-1. On the forward portion (on the user side) of the sensor unit 18 is provided a front guide 14. The front guide 14 comprises a sheet of synthetic resin, transparent or substantially transparent. In order to serve the purposes of guiding the hand of the user in the front and of supporting the wrist, the cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

Further, the sensor unit 18 of the main unit 10 faces rearward and is inclined upward, and a flat portion 22 is provided therebehind.

As shown in Fig. 3, the ATM 1 has a CIP (Card Reader Printer) unit 60 having a card insertion/ejection aperture 6-4; a bankbook unit 64 having a bankbook insertion/ejection aperture 6-5; a paper currency/coin counter unit 66 having a paper currency insertion/dispensing aperture 6-3 and a coin insertion/dispensing aperture 6-2; an attendant operation unit 65; a control unit 67; a customer operation panel (UOP) 6-1 for operation and display; and an image capture device (vein sensor) 1-1.

The CIP unit 60 has an IC card reader/writer 60 which reads and writes the magnetic stripe and IC chip of an IC card 5; a receipt printer 63 which records transactions on a receipt; and a journal printer 62 which prints the history of transactions on journal forms.

The bankbook unit 64 records transactions on pages of a bankbook, and when necessary turns the pages. The attendant operation portion 65 displays the state and performs operations upon occurrence of a fault or during inspections by operation of an attendant. The paper currency/coin counting unit 66 validates, counts, and stores inserted paper currency and coins, and counts and dispenses paper currency and coins in the required quantities.

The control unit 67 communicates with the server 4, and has an ATM application (program) 68 which controls ATM operation and an authentication library (authentication processing program) 69 for biometrics authentication processing. A portion of this ATM application 68 acts in concert with the authentication library 69 to control biometrics authentication guidance screens of the UOP (customer operation panel) 6-1. The ATM application 68 has a function which compares the password data (individual data) on the magnetic stripe of the IC card 5 with the password data input from the UOP 6-1, to authenticate the individual.

### Biometrics Authentication Processing

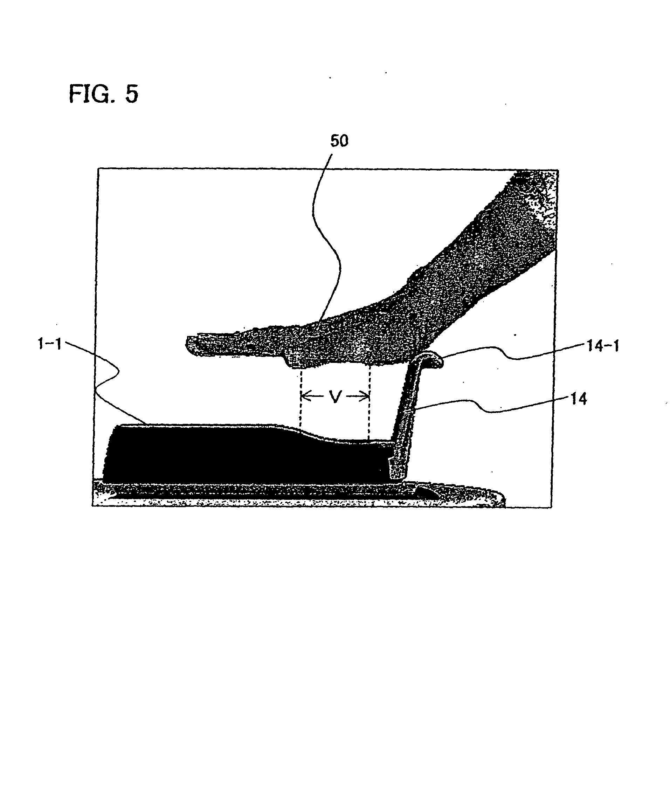

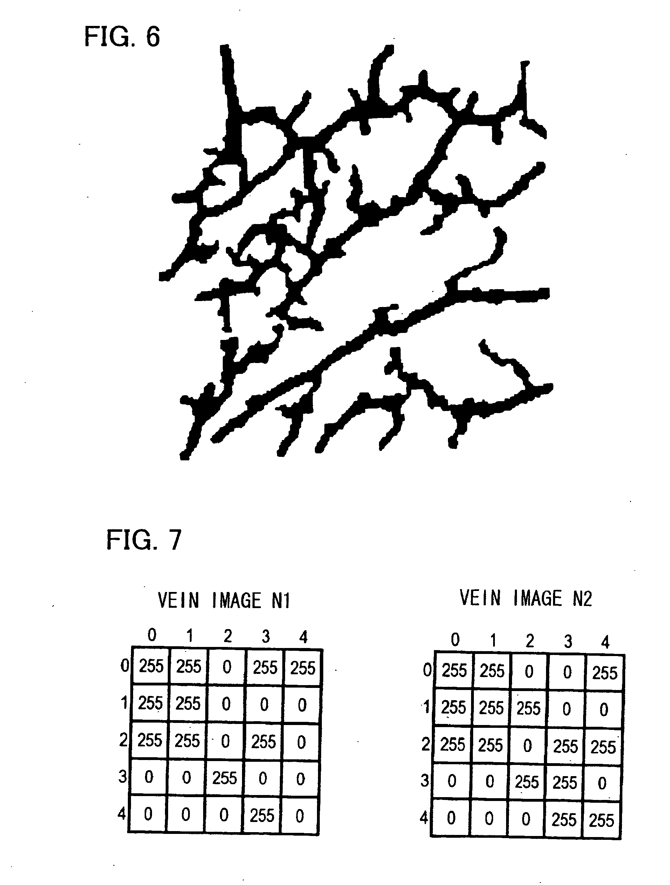

Fig. 4 is a block diagram of the biometrics authentication processing of an embodiment of the invention, Fig. 5 is a side view of the image capture device 1-1 of Fig. 4, Fig. 6 explains the detected blood vessel image in Fig. 4, and Fig. 7 explains the verification processing in Fig. 4.

As shown in Fig. 4, the palm image capture device 1-1 of Fig. 1 has a sensor unit 18 mounted substantially in the center of the main unit 10. A front guide 14 is provided in the forward portion (on the user side) of the sensor unit 18. The front guide 14 comprises a sheet of synthetic resin, transparent or substantially transparent.

The front guide 14 serves the purposes of guiding the hand of the user in the front and of supporting the wrist. Hence the front guide 14 provides guidance to the user to guide and support the wrist above the sensor unit 18. As a result, the attitude of the palm of the hand, that is, the position, inclination, and size over the sensor unit 18 can be controlled. The cross-sectional shape of the front guide 14 has a vertical body and, in the top portion, a horizontal portion 14-1 to support the wrist. A depression 14-2 is formed continuously in the center of the horizontal portion 14-1, to facilitate positioning of the wrist.

The sensor unit 18 is provided with an infrared sensor (CMOS sensor) and focusing lens 16 and a distance sensor 15 in the center; on the periphery thereof are provided a plurality of near-infrared light emission elements (LEDs) 12. For example, near-infrared light emission elements 12 are provided at eight places on the periphery, to emit near-infrared rays upwards.

The readable region V of this sensor unit 18 is regulated by the relation between the sensor, focusing lens, and near-infrared light emission region. Hence the position and height of the front guide 14 are set such that the supported wrist is positioned in the readable region V.

As shown in Fig. 5, when the hand 50 is extended with palm flat, the palm has maximum area, and moreover is flat, so that when the palm is subjected to image capture in the image capture region V of the sensor unit 18, an accurate vein pattern which can be used in registration and verification is obtained. As shown in Fig. 5, when the distance from the sensor unit 18 to the palm is within a prescribed range, a sharp and focused image is obtained by the sensor 16 of the sensor unit 18.

Hence as shown in Fig. 4, when the front guide 14 supports the wrist 52 above the sensor unit 18, the user's hand can be guided and supported so that the position, inclination and height of the palm above the sensor unit 18 are made precise with respect to the image capture range of the sensor unit 18.

Returning to Fig. 4, the authentication library (authentication program) 69 of the control unit 67 of the ATM 1 connected to the image capture device 1 executes a series of verification processing 30 to 46. The control unit 67 of the ATM 1 has, for example, a CPU, various types of memory, interface circuitry, and other circuits necessary for data processing. The CPU executes the series of verification processing 30 to 46.

Distance/hand outline detection processing 30 receives the distance from the image capture device 1-1 measured by the distance sensor 15, judges whether the palm or other object is at a distance within a prescribed range from the sensor unit 18, and detects the outline of the hand from the image captured by the sensor unit 18; and judges whether the image can be used in registration and verification processing based on the detected outline. For example, a judgment is made as to whether the palm appears sufficiently in the image.

Guidance message output processing 32 outputs to the UOP 6-1 of the ATM 6 a message guiding the palm to the left or right, forward or backward, upward or downward, when the distance measured by the distance sensor 15 indicates that the hand is outside the image capture range, and when hand outline detection processing 30 indicates that the image cannot be used in registration and verification processing. By this means, the hand of the user is guided into position over the image capture device 1-1.

Blood vessel image extraction processing 34 extracts a vein image from the image of the hand when hand outline detection processing 30 judges that an image has been captured with the hand held correctly. That is, as explained in Fig. 10 and Fig. 11, grayscale data of the image of the palm such as that of Fig. 7 is obtained through differences in reflectivity. The vein pattern image is an image like that shown in Fig. 6; the data is grayscale data such as that in Fig. 7.

Registered blood vessel image search processing 46 searches a storage portion (IC chip memory) of the IC card 5 shown in Fig. 3 for three registered blood vessel image data sets R1, R2, R3 corresponding to the individual ID (account number). As shown in Fig. 7, verification processing 44 compares the blood vessel image data N1 detected by the blood vessel image detection processing 34 with the registered blood vessel image data N2 (R1, R2, R3), performs verification processing, and outputs a verification result to the ATM application 68.

In order to install such a biometrics authentication system, the biometrics reader device (image capture device) 1-1 and the authentication program 69 must be installed in the automated transaction machine 6.

### Automated Transaction Control Method

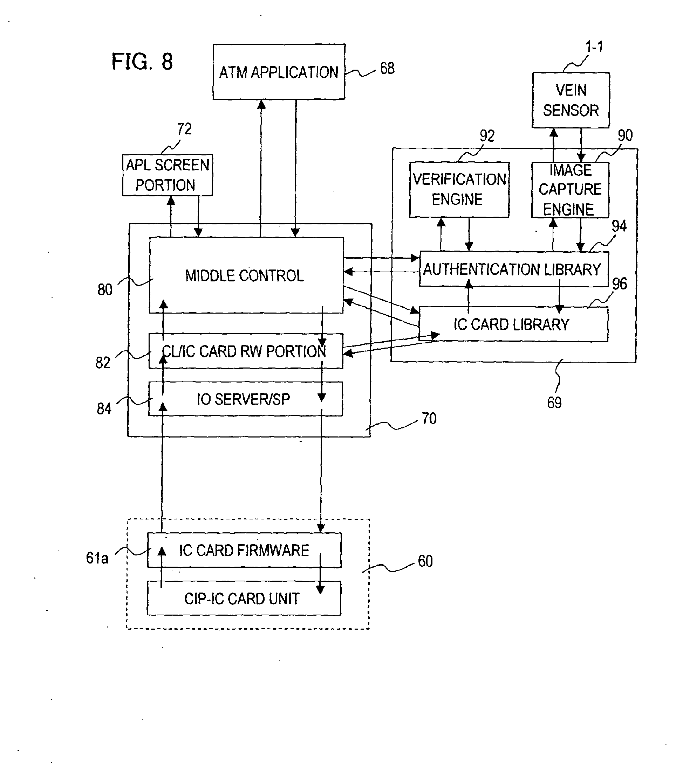

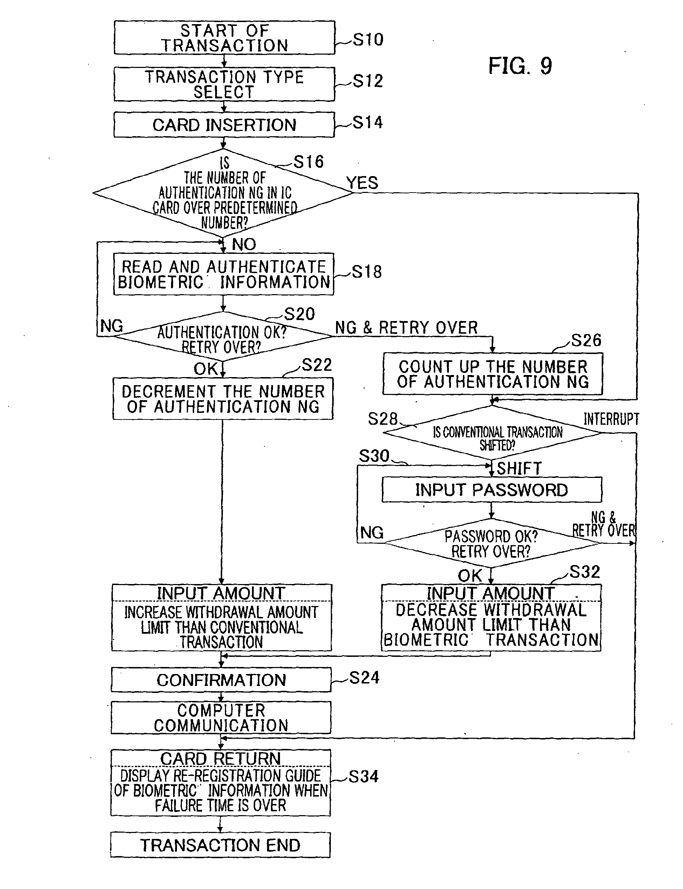

Fig. 8 shows the configuration of an ATM program of one embodiment of the invention, and Fig. 9 shows the transaction processing flow by a program configured as in Fig. 8.

Fig. 8 shows the program configuration of the control unit 67 of the ATM 6 that a vein sensor 1-1 is equipped and moreover an authentication program 69 is installed as shown in Fig.3. As shown in Fig. 8, middleware programs 70, 72 are positioned between an ATM application 68 which performs transaction processing and the IC card firmware 61a of the IC card reader/writer 60. The middleware program 70 queries the authentication program 69 and determines the automated transaction method in response to the start of a transaction by the ATM application 68.

That is, the middleware program 70 has an IO server/SP portion 84, which functions as a server and supervisor of the IC card firmware program 61a; a CL/IC card RW portion 82, which functions as a client of the IC card reader/writer; and a middle control portion 80, connected to the CL/IC card RW portion, and which initializes the authentication program 69. This middle control portion 80 exchanges data with the ATM application 68, and controls the application screen portion 72.

On the other hand, the authentication program 69 has an IC card library 96, which reads biometrics data in the IC card 5 using the IC card reader/writer 61; an image capture engine 90, which controls image capture by the vein sensor 1-1; a verification engine 92, which performs the above-described verification processing 44 of Fig. 4; and an authentication library 94, which causes the IC card reader library 96 to execute the above-described registered blood vessel search processing 46 of Fig. 4, and also causes the image capture engine 90 to execute the above-described distance/hand outline detection processing 30 and blood vessel extraction processing 34 of Fig. 4. This authentication library 94 is initialized by the middle control portion 80, initiates authentication processing, and returns a verification result.

Transaction processing by the programs of Fig. 8 is explained using the flow diagram of Fig. 9.
(S10) Upon detecting touching of the screen of the UOP 6-1, the ATM application 68 initiates a transaction.
(S12) Upon initiating a transaction, the ATM application 68 displays a transaction type selection screen on the UOP 6-1. The user inputs the transaction type from the UOP 6-1.
(S14) Upon judging that a withdrawal-type transaction (withdrawal, cash transfer) has been selected, the ATM application 68 displays a card insertion screen on the UOP 6-1. When the user inserts an IC card 5 into the insertion aperture 6-4, the IC card reader/writer 61 reads the data on the magnetic stripe of the IC card 5. This data comprises the account number of the user and a number of biometrics authentication NG attempts, described below. The number of biometrics authentication NG attempts is the number of times that the authentication result has been NG even when biometrics authentication was attempted a plurality of times.
(S16) The ATM application 68 receives the number of authentication NG attempts recorded on the IC card 5 from the IC card reader/writer 61, and judges whether this number of authentication NG attempts is equal to or greater than a preset number. For example, the preset number may be five times. If the number of authentication NG attempts is equal to or greater than the preset number, a transaction based on biometrics authentication is judged to be not possible, and processing proceeds to step S28.
(S18) On the other hand, if the number of authentication NG attempts is not equal to or greater than the preset number, the ATM application 68 begins biometrics authentication by instructing the middle control portion 80 to begin authentication. As a result, the middle control portion 80 causes the APL screen portion 72 to display a biometrics authentication screen on the UOP 6-1. Then, in order to read biometrics information and perform authentication, the middle control portion 80 receives the account number read by the ATM application 68 from the magnetic stripe of an IC card 5 from the IC card reader/writer 61 through insertion of the IC card, and sends the account number to the IC card library 96.
   The middle control portion 80 also initializes the authentication library 94, and queries the state. The IC card library 96 reads registered blood vessel image data for the account number on the IC card 5 from the IC card firmware 61a, via the CL/IC card RW portion 82 and the 10 server/SP 84 (see Fig. 4). Also, the authentication library 94, having been started, causes the image capture engine 90 to execute image acquisition operation by the vein sensor 1-1, including the above-described distance/hand outline detection processing 30 and blood vessel image extraction processing 34 of Fig. 4. The authentication library 94 then sends the extracted blood vessel image obtained from the image capture by the vein sensor 1-1 and the registered blood vessel image to the verification engine 92, and causes verification processing to be performed. The middle control portion 80 is notified of each of the states of progress of the authentication library 94, and the middle control portion 80 causes the APL screen portion 72 to display states of progress (reading, verifying, verification result) on the UOP 6-1.
(S20) When the middle control portion 80 receives notification that a verification result is unsatisfactory (NG) from the authentication library 94, the middle control portion 80 increments the number of retries by "1". Then, the middle control portion 80 judges whether the number of retries has exceeded the preset number of retries (for example, 3) (retry over). If the number of retries has not exceeded the preset number of retries, processing returns to step S18. If on the other hand the number of retries has exceeded the preset number of retries, a transaction based on biometrics authentication is judged to be not possible, and processing advances to step S26.
(S22) The middle control portion 80 receives notification that the verification result is satisfactory (OK) within the preset number of retries from the authentication library 94, the middle control portion 80 decrements the number of authentication NG attempts on the IC card 5 by "1". Of course, when the number of authentication NG attempts recorded on the IC card 5 is "0", decrement processing is not performed. The middle control portion 80 notifies normal authentication to the ATM application 68. As a result, the ATM application 68 displays the monetary amount input/confirmation screen on the UOP 6-1 to prompt for input of a monetary amount, as normal transaction processing after authentication. At this time, security is maintained, so that the withdrawal amount limit can be raised above the withdrawal amount limit of normal transactions, as described in step S32 below. The ATM application 68 checks whether the monetary amount input by the user is within the withdrawal amount limit.
(S24) When the user performs an operation to confirm the amount, the ATM application 68 communicates with a computer (host), and displays a screen to this effect on the UOP 6-1. Processing then advances to step S34.
(S26) If on the other hand in step S20 the middle control portion 80 judges that the number of retries has been exceeded, the number of authentication NG attempts recorded on the IC card 5 is incremented.
(S28) If in steps S16 or S20 it is judged that a transaction based on biometrics authentication is not possible, the middle control portion 80 judges, using setting information for the user, whether to make a transition to a conventional transaction. If no transition is made, that is, if settings stipulate interruption, the APL screen portion 72 displays an interruption screen on the UOP 6-1, and an interrupt response is returned to the ATM application 68. The ATM application advances to step S34.
(S30) In step S28, if settings do not stipulate interruption, the middle control portion 80 responds a conventional transaction response to the ATM application 68. The ATM application 68 performs automated transaction processing using a conventional password. That is, a password input screen is displayed, a password number is input and is verified against the password number corresponding to the account number of the IC card 5. And if the verification result is satisfactory, processing advances to step S32. If on the other hand the verification result is unsatisfactory, the user is prompted to retry password number input, verification is performed. And if the verification result is unsatisfactory even when the number of retries reaches a prescribed number, a screen indicating the transaction is not possible is displayed, and processing advances to step S34.
(S32) The ATM application 68 displays a monetary amount input/confirmation screen on the UOP 6-1 in order to prompt for input of a monetary amount, in normal transaction processing following authentication. In this case, in consideration of the fact that security has not been maintained, the withdrawal amount limit is lowered below the withdrawal amount limit of a transaction based on biometrics authentication, as explained in step S22. The ATM application 68 checks that the monetary amount input by the user is within the withdrawal amount limit. Processing then advances to step S24.
(S34) When a monetary amount is input, and the response from the host received by computer communication is satisfactory, withdrawal from the account, transfer of funds into the account, or transfer of funds to another account is performed, the number of authentication NG attempts is written to the IC card 5, and a receipt is returned. At this time, if in step S16 the number of authentication NG attempts was equal to or greater than the preset number, the middle control portion 80 displays on the UOP 6-1 a guidance screen prompting re-registration of biometrics authentication information. By this means, re-registration by the individual is possible, and automated transactions based on biometrics authentication can be resumed.

Thus in an automated transaction device having biometric authentication functions, even when biometrics authentication is unsuccessful, a transition is made to a conventional transaction based on password authentication using an IC card, so that transaction processing which accommodates changes in the physical condition of the user is possible even while maintaining the accuracy of biometric authentication, contributing to improved convenience to the user.

Further, the number of authentication NG attempts is provided on the card, and if biometrics authentication retries exceed a prescribed number, this number of authentication NG attempts is incremented. And if biometrics authentication is satisfactory, the number of authentication NG attempts is decremented, and if the number of authentication NG attempts exceeds a preset number, a transition is made to a conventional transaction without performing biometrics authentication. Consequently even if biometrics authentication happens to end in an NG result, recovery from this state is possible and biometrics authentication can again be performed; moreover, if the number of authentication NG attempts equals or exceeds a preset number, the user is prompted to re-register, so that changes with time or similar in the physical condition of the user can be accommodated.

Moreover, because the withdrawal amount limit in a transaction based on biometrics authentication is made greater than the withdrawal amount limit of a conventional transaction (with authentication using a password), the withdrawal transaction can be modified according to the degree of security. And when a biometrics authentication result is NG, damages due to illicit acts are reduced even in the case of a conventional transaction.

Moreover, because this embodiment is realized using middleware, realization is possible without changes to the preexisting ATM application 68.

### Other Automated Transaction Control Methods

Fig. 10 shows the flow of other transaction processing by a program configured as in Fig. 8.
(S40) Similarly to step S10, the ATM application 68, upon detecting touching of the screen of the UOP 6-1, initiates a transaction.
(S42) Similarly to step S12, on starting a transaction the ATM application 68 displays a transaction type selection screen on the UOP 6-1. The user inputs the transaction type from the UOP 6-1.
(S44) Similarly to step S14, upon judging that a withdrawal-type transaction (withdrawal, cash transfer) has been selected, the ATM application 68 displays a card insertion screen on the UOP 6-1. When the user inserts an IC card 5 into the insertion aperture 6-4, the IC card reader/writer 61 reads the data on the magnetic stripe of the IC card 5. This data comprises the account number of the user and a number of biometrics authentication NG attempts, described above.
(S46) Similarly to step S16, the ATM application 68 receives the number of authentication NG attempts recorded on the IC card 5 from the IC card reader/writer 61, and judges whether this number of authentication NG attempts is equal to or greater than a preset number. For example, the preset number may be five times. If the number of authentication NG attempts is equal to or greater than the preset number, a transaction based on biometric authentication is judged to be not possible, and processing proceeds to step S58.
(S48) On the other hand, if the number of authentication NG attempts is not equal to or greater than the preset number, similarly to step S18, the ATM application 68 begins biometrics authentication by instructing the middle control portion 80 to begin authentication. As a result, the middle control portion 80 causes the APL screen portion 72 to display a biometrics authentication screen on the UOP 6-1. Then, in order to read biometrics information and perform authentication, the middle control portion 80 receives the account number read by the ATM application 68 from the magnetic stripe of an IC card 5 from the IC card reader/writer 61 through insertion of the IC card, and sends the account number to the IC card library 96. The IC card library 96 reads registered blood vessel image data for the account number on the IC card 5 from the IC card firmware 61a, via the CL/IC card RW portion 82 and the 10 server/SP 84 (see Fig. 4). Also, the authentication library 94, having been started, causes the image capture engine 90 to execute image acquisition operation by the vein sensor 1-1, including the above-described distance/hand outline detection processing 30 and blood vessel image extraction processing 34 of Fig. 4. The authentication library 94 then sends the extracted blood vessel image obtained from image capture by the vein sensor 1-1 and the registered blood vessel image to the verification engine 92, and causes verification processing to be performed. The middle control portion 80 is notified of each of the states of progress of the authentication library 94, and the middle control portion 80 causes the APL screen portion 72 to display states of progress (reading, verifying, verification result) on the UOP 6-1.
(S50) The middle control portion 80 receives notification that a verification result is unsatisfactory (NG) from the authentication library 94, the middle control portion 80 increments the number of retries by "1". Then, the middle control portion 80 judges whether the number of retries has exceeded the preset number of retries (for example, 3) (retry over). If the number of retries has not exceeded the preset number of retries, processing returns to step S48. If on the other hand the number of retries has exceeded the preset number of retries, a transaction based on biometrics authentication is judged to be not possible, and processing advances to step S56.
(S52) The middle control portion 80 receives notification that the verification result is satisfactory (OK) within the preset number of retries from the authentication library 94, then the middle control portion 80 decrements the number of authentication NG attempts on the IC card 5 by "1". Of course, when the number of authentication NG attempts recorded on the IC card 5 is "0", decrement processing is not performed. The middle control portion 80 notifies normal end of the authentication to the ATM application 68. The ATM application 68 displays the monetary amount input/confirmation screen on the UOP 6-1 to prompt for input of a monetary amount, as normal transaction processing after authentication. At this time, security is maintained, so that the withdrawal amount limit can be raised above the withdrawal amount limit of normal transactions. The ATM application 68 checks whether the monetary amount input by the user is within the withdrawal amount limit.
(S54) When the user performs an operation to confirm the amount, the ATM application 68 communicates with a computer (host), and displays a screen to this effect on the UOP 6-1. Processing then advances to step S64.
(S56) If on the other hand in step S50 the middle control portion 80 judges that the number of retries has been exceeded, the number of authentication NG attempts recorded on the IC card 5 is incremented.
(S58) If in steps S46 or S50 it is judged that a transaction based on biometrics authentication is not possible, the middle control portion 80 judges, using setting information for the user, whether to make a transition to a conventional transaction. If no transition is made, that is, if settings stipulate interruption, the APL screen portion 72 displays an interruption screen on the UOP 6-1, and an interrupt response is returned to the ATM application 68. The ATM application 68 advances to step S54.
(S60) In step S58, if settings do not stipulate interruption, the middle control portion 80 returns a conventional transaction response to the ATM application 68. The ATM application 68 performs a degraded automated transaction processing using a conventional password. That is, as a degraded automated transaction, for example, balance confirmation is performed.
(S62) That is, a password input screen is displayed, the password number is input and is verified against the password number corresponding to the account number of the IC card 5. And if the verification result is satisfactory, balance confirmation processing is initiated, and processing proceeds to step S54. If on the other hand the verification result is unsatisfactory, the user is prompted to retry password number input, verification is performed. And if the verification result is unsatisfactory even when the number of retries has reached a prescribed number, a screen is displayed indicating that the transaction is not possible, and processing advances to step S64.
(S64) When a monetary amount is input, and the response from the host received by computer communication is satisfactory, withdrawal from the account, transfer of funds into the account, or transfer of funds to another account is performed, the number of authentication NG attempts is written to the IC card 5, and a receipt is returned. At this time, if in step S46 the number of authentication NG attempts was equal to or greater than the preset number, the middle control portion 80 displays on the UOP 6-1 a guidance screen prompting re-registration of biometric authentication information. By this means, re-registration by the individual is possible, and automated transactions based on biometric authentication can be resumed.

Hence in an automated transaction device having biometric authentication functions, a transition can be made to conventional transactions based on password authentication using an IC card even when biometrics authentication is unsuccessful, so that transactions which take into account changes in the physical condition of the user become possible even while maintaining the authentication accuracy of biometric authentication, contributing to improved convenience for the user.

Further, the number of authentication NG attempts is recorded on the card, and if the stipulated number of biometrics authentication retries are exceeded, this number of authentication NG attempts is incremented. If biometrics authentication is satisfactory, the number of authentication NG attempts is decremented. And if the number of authentication NG attempts is equal to or greater than a preset number, a transition is made to a conventional transaction without performing biometrics authentication. Hence even if biometrics authentication happens to end in an NG result, recovery from this state is possible and biometrics authentication can again be performed. Moreover, if the number of authentication NG attempts equals or exceeds a preset number, the user is prompted to re-register, so that changes with time or similar in the physical condition of the user can be accommodated.

Moreover, because the range of conventional transactions (with authentication using a password) is limited compared with transactions based on biometrics authentication, transactions requiring authentication can be performed according to the degree of security, and when a biometrics authentication result is NG, damages due to illicit acts are reduced even in the case of a conventional transaction.

Moreover, because this embodiment is realized using middleware, realization is possible without changes to the preexisting ATM application 68.

### Other Embodiments

In the above-described embodiments, biometrics authentication was explained for the case of authentication using vein patterns in the palm of the hand; but application to other biometrics authentication, such as vein patterns in the fingers, palm-prints, or other features of the palm of the hand, as well as to fingerprints, facial features, and similar is also possible. Moreover, the case of automated equipment for financial operations was explained, but application to automated ticket issuing equipment, automated vending equipment, and to automated machines and computers in other areas, as well as to door opening/closing equipment in place of keys, and to other equipment where individual authentication is required, is also possible.

Similarly, the middle control portion 80 starts the authentication program 69 and controls biometrics authentication and traditional transactions; but execution by the ATM application and an authentication program is also possible.

Moreover, cards are not limited to IC cards, and other recording media may be used; authentication in conventional transactions is not limited to passwords, but can use other non-biometrics authentication means such as seals, signatures, or similar.

In the above, embodiments of the invention have been explained; but the invention can be variously modified within the scope of the invention, and these modifications are not excluded from the scope of the invention.

In an automated transaction device having biometrics authentication functions, a transition can be made to conventional transactions based on non-biometrics authentication using a card held by the user even when biometrics authentication is unsuccessful. So transactions which take into account changes in the physical condition of the user become possible even while maintaining the authentication accuracy of biometric authentication, contributing to improved convenience for the user.

## Claims

1. An automated transaction device, which reads individual data from storage media of a user, verifies the data against input individual data, and performs automated transactions, comprising:
a media reading unit which reads storage media of said user;
a biometrics unit which verifies registered biometrics characteristic data according to the individual data of said storage media against said biometrics characteristic data detected from a body of said user, and performs individual authentication; and
a control unit which performs automated transactions according to the authentication result of said biometrics unit,
wherein said control unit performs non-biometrics authentication in which individual data of said storage media is verified against input individual data, and executes an automated transaction, when the biometrics authentication result by said biometrics unit is not satisfactory.

2. The automated transaction device according to Claim 1, wherein said control unit causes conditions of a transaction based on said biometrics authentication to be different from conditions of a transaction based on non-biometrics authentication in which verification against said individual data is performed.

3. The automated transaction device according to Claim 1 or 2 wherein said control unit retries said biometrics authentication when the verification result of biometrics authentication by said biometrics unit is not satisfactory, and transits to said non-biometrics authentication when the number of retries exceeds a preset number of retries.

4. The automated transaction device according to Claim 3, wherein said control unit records, on said storage media, the number of retry over that the number of retries have exceeded said preset number of retries as a number of authentication NG attempts, reads the number of authentication NG from said storage media, judges whether said number of authentication NG attempts has exceeded a preset number of NG attempts, and transits to said non-biometrics authentication when said number of authentication NG attempts has exceeded the preset number of NG attempts.

5. The automated transaction device according to Claim 4, wherein said control unit urges re-registration of said biometrics authentication by means of a guidance screen of said automated transaction device when said number of authentication NG attempts exceeds the preset number of NG attempts.

6. The automated transaction device according to Claim 2, wherein said control unit causes withdrawal amount limit for a transaction based on said biometrics authentication to be different from the withdrawal amount limit for a transaction based on non-biometrics authentication in which verification of said individual data is performed.

7. The automated transaction device according to Claim 2, wherein said control unit limits range of transactions based on said non-biometrics authentication beyond the range of transactions based on said biometrics authentication.

8. The automated transaction device of any preceding claim , wherein said biometrics unit comprises:
an image capture device which captures an image of said body; and
an authentication unit which extracts said biometrics characteristic data from said captured images, verifies said extracted biometrics characteristic data against said registered biometrics characteristic data on said storage media, and performs individual authentication.

9. The automated transaction device of any preceding claim , wherein said control unit has:
a middleware program which starts said biometrics unit and, upon judging that said biometrics authentication result is not satisfactory, executes said non-biometrics authentication; and
a transaction processing program which controls an automated transaction mechanism to perform automated transaction operations according to said authentication result.

10. An automated transaction control method, comprising the steps of:
verifying biometrics characteristic data registered for individual data on a storage media against said biometrics characteristic data detected from a body using a biometrics unit, and performing biometrics authentication;
executing an automated transaction based on said biometrics authentication when the result of said biometrics authentication is satisfactory,; and
verifying individual data of said storage media against input individual data, performing non-biometrics authentication for individual authentication, and executing an automated transaction when the result of said biometrics authentication is not satisfactory.

11. The automated transaction control method according to Claim 10, further comprising a step of causing conditions of a transaction based on said biometrics authentication to be different from the conditions of a transaction based on non-biometrics authentication in which verification against said individual data is performed.

12. The automated transaction control method according to Claim 10 or 11, further comprising:
a step, when the verification result of biometrics authentication by said biometrics unit is not satisfactory, of retrying said biometrics authentication; and
a step of transiting to said non-biometrics authentication when the number of retry is equal or greater than preset number of retries.

13. The automated transaction control method according to Claim 12, further comprising the steps of:
recording on said recording media, as the number of authentication NG attempts, the number of retry over which said number of retries has exceeded said preset number;
reading the number of authentication NG attempts from said storage media;
judging whether said number of authentication NG attempts exceeds a preset number of NG attempts; and
transiting to said non-biometrics authentication when said number of authentication NG attempts exceeds the preset number of NG attempts.

14. The automated transaction control method according to Claim 13, further comprising a step, when said number of authentication NG attempts exceeds the preset number of NG attempts, of urging re-registration of said biometrics authentication by means of a guidance screen.

15. The automated transaction control method according to Claim 11, wherein said step of causing transaction conditions to be different comprises a step of causing the withdrawal amount limit of a transaction based on said biometrics authentication to be different from the withdrawal amount limit of a transaction based on non-biometrics authentication in which verification of said individual data is performed.

16. The automated transaction control method according to Claim 11, wherein said step of causing transaction conditions to be different comprises a step of limiting the range of transactions based on said non-biometrics authentication, beyond the range of transactions based on said biometrics authentication.

17. The automated transaction control method of any of claim 10-16 , wherein said biometrics authentication step is executed by an image capture device which captures images of said body, and by an authentication unit which extracts said biometrics characteristic data from said captured images, verifies said biometrics characteristic data against said registered biometrics characteristic data on said storage media, and performs individual authentication.

18. The automated transaction control method cf any of claims 10-17 , further comprising the steps of:
starting said biometrics unit with a middleware program;
executing said non-biometrics authentication with a transaction processing program when said biometric authentication result is judged to be not satisfactory with said middleware program; and
controlling an automated transaction mechanism which executes said automated transaction operation according to said authentication result with said transaction processing program.

19. A computer program which, when executed on a computer, causes the computer to perform the steps of:
verifying biometrics characteristic data registered for individual data on a storage media against said biometrics characteristic data detected from a body of an user using a biometrics unit, and performing biometrics authentication;
executing an automated transaction based on said biometrics authentication when the result of said biometrics authentication is satisfactory; and
verifying individual data on said storage media against input individual data, performing non-biometrics authentication for individual authentication, and executing an automated transaction when the result of said biometric authentication is not satisfactory.

20. The computer program according to Claim 19, causing the computer to perform a further step of causing conditions of a transaction based on said biometrics authentication to be different from conditions of a transaction based on non-biometrics authentication in which verification against said individual data is performed.
